# EUROPÄISCHE PATENTSCHRIFT

(11) **EP 0 664 821 B1**
(45) Veröffentlichungstag und Bekanntmachung des Hinweises auf die Patenterteilung: **07.08.1996**
(21) Anmeldenummer: 93920737.9
(22) Anmeldetag: 16.09.1993
(51) Int. Cl.: C09K 5/00

(54) **LATENTSPEICHER**
LATENT STORE
ACCUMULATEUR LATENT

(30) Priorität: 19.10.1992 DE 4235159
(43) Veröffentlichungstag der Anmeldung: 02.08.1995
(73) Patentinhaber: SABET, Huschang, D-70469 Stuttgart1 (DE)
(72) Erfinder: SABET, Huschang, D-70469 Stuttgart1 (DE)
(74) Vertreter: Wolf, Eckhard, Dr.-Ing.
(86) Internationale Anmeldenummer: EP9302502
(87) Internationale Veröffentlichungsnummer: WO9409081

(56) Entgegenhaltungen:
- BE-A- 848 047
- CA-A- 1 248 907
- US-A- 4 004 572
- DATABASE INSPEC INSTITUTE OF ELECTRICAL ENGINEERS, STEVENAGE, GB Inspec No. 1365576 WADDELL W H ET AL 'Observation of high photoisomerization quantum yields for11-cis retinal analogs having 12-s-trans geometries'
- DATABASE INSPEC INSTITUTE OF ELECTRICAL ENGINEERS, STEVENAGE, GB Inspec No. 767511 BIRGE R R ET AL 'Possible influence of a low-lying 'covalent' excited state on the absorption spectrum and photoisomerization of 11-cis retinal'
- DATABASE INSPEC INSTITUTE OF ELECTRICAL ENGINEERS, STEVENAGE, GB Inspec No. 767511 BIRGE R R ET AL 'Possible influence of a low-lying 'covalent' excited state on the absorption spectrum and photoisomerization of 11-cis retinal' & CHEM. PHYS. LETT. (NETHERLANDS), CHEMICAL PHYSICS LETTERS, 15 MARCH 1975, NETHERLANDS, 31, 3, 451 - 454 ISSN 0009-2614 s

## Beschreibung

### Latentspeicher

Die Erfindung betrifft einen Latentspeicher zur Speicherung von Strahlungsenergie der Sonne.

Bei Latentwärmespeichern ist es an sich bekannt, Phasenumwandlungsenergie, wie beispielsweise die Schmelzwärme oder die Verdampfungswärme, durch Wärmeeinwirkung bei annähernd konstanter Temperatur zu speichern und bei Bedarf aus dem Speicher in Form von Wärme zu entziehen. Andere Energieformen, wie elektromagnetische Energie, werden hierbei zunächst in Wärmeenergie umgewandelt und in dieser Form gespeichert.

Der Erfindung liegt die Aufgabe zugrunde, einen Latentspeicher im Sinne eines "Sonnenstrahlenspeichers" zu entwickeln, in welchem die ankommenden sichtbaren oder ultravioletten Sonnenstrahlen unmittelbar und nicht über den Umweg der Wärme latent gespeichert werden können.

Zur Lösung dieser Aufgabe wird die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Die erfindungsgemäße Lösung geht von dem Gedanken aus, daß sichtbare oder ultraviolette Sonnenstrahlen zur Photoisomerisation organischer Moleküle und damit zur Energiespeicherung und zur Auslösung einer Energiefreisetzung herangezogen werden kann. Um dies zu erreichen, wird gemäß der Erfindung vorgeschlagen, eine organische Speichersubstanz zu verwenden, die mindestens zwei stabile stereoisomere Konfigurationen aufweist, von denen eine erste Konfiguration photosensitiv ist und durch Photoisomerisation unter Energiefreisetzung in die zweite Konfiguration umsetzbar ist, während die zweite Konfiguration durch Kontakt mit einem stereoselektiven, vorzugsweise Sonnenstrahlen-absorbierenden Regenerationsmittel unter Energieaufnahme in die erste Konfiguration zurückführbar ist.

Gemäß einer bevorzugten Ausgestaltung der Erfindung bestehen die Stereoisomeren der Speichersubstanz aus einem cis-Retinal, vorzugsweise aus 11-cis-Retinal einerseits und aus all-trans-Retinal andererseits (Retinal = Vitamin A₁ - Aldehyd). Als Regenerationsmittel wird zweckmäßig ein in Regenerationsrichtung stereoselektives Pigment, vorzugsweise Melanin oder ein im Pigment vorhandener Katalysator verwendet. Die photosensitive stereoisomere Konfiguration der Speichersubstanz ist dabei zweckmäßig gegen Lichtzutritt abschirmbar und zur Auslösung der stereoisomeren Umwandlung mit Sonnenlicht beaufschlagbar.

Gemäß einer bevorzugten Ausgestaltung der Erfindung sind die stereoisomere Speichersubstanz einerseits und das Regenerationsmittel andererseits auf je einem Träger angeordnet, wobei die Träger unter Herstellung eines Berührungskontakts zwischen Speichersubstanz und Regenerationsmittel gegeneinander verschiebbar sind und das photosensitive Regenerationsmittel dauernd oder zeitweilig mit Sonnenstrahlung beaufschlagt ist, und wobei die Speichersubstanz während der Kontaktphasen gegen die Sonnenstrahlung abgeschirmt ist und außerhalb der Kontaktphasen zumindest zeitweilig zur Auslösung der Energiefreisetzung mit Sonnenstrahlung beaufschlagt ist.

Vorteilhafterweise weist der Speichersubstanz-Träger eine hohe Wärmeleitfähigkeit auf. Um die freigesetzte Energie aufnehmen zu können, kann der Speichersubstanz-träger als solcher oder ein mit diesem während der Kontaktphasen in Wärmekontakt bringbarer Wärmeleitkörper als flüssigkeits- und/oder gasdurchströmter Wärmeaustauscher ausgebildet sein. Letzterer kann mechanisch mit dem Regenerationsmittelträger gekoppelt werden.

Eine weitere vorteilhafte Ausgestaltung der Erfindung sieht vor, daß der Regenerationsmittelträger mindestens einen Ring mit einer Vielzahl von bezüglich einer Zentralachse in Umfangsrichtung einen gleichen Abstand voneinander aufweisenden Regenerationsmittelscheiben aufweist, und daß im Bereich zwischen den Regenerationsmittelscheiben zur Sonne hin ausrichtbare und zur Speichersubstanz hin offene Fenster angeordnet sind, wobei der Speichersubstanzträger gegenüber dem Ring schrittweise um die Zentralachse verdrehbar und in vorgegebenen Schrittpausen der Berührungskontakt zwischen der Speichersubstanz und dem Regenerationsmittel herstellbar ist. Die Regenerationsmittelscheiben können dabei als vorzugsweise durch eine Gitterstruktur stabilisierte Scheiben aus vorzugsweise mit einem Bindemittel verpreßtem pulverförmigem Regenerationsmittel ausgebildet sein, die auf ihrer Außenseite mit Sonnenlicht beaufschlagbar und an ihrer Innenseite gegen die Speichersubstanz andrückbar sind.

Der die Speichersubstanz aufnehmende Träger kann auch als Zylinder, Kegel oder Prisma ausgebildet sein, an dessen Außen- oder Umgangsfläche die Speichersubstanz angeordnet ist, während der das Regenerationsmittel aufweisende Träger als den Speichersubstanzträger außen übergreifender Hohlkörper ausgebildet sein kann. Zur Auslösung der Kontaktphase und der Belichtungsphase kann der Regenerationsmittel-Träger relativ zu dem Speichersubstanzträger axial verschoben, vorzugsweise jalousienartig angehoben und abgesenkt werden.

Eine weitere vorteilhafte Ausgestaltung der Erfindung sieht vor, daß die photosensitive Konfiguration der Speichersubstanz zu Transport- und Lagerzwecken an ein stereospezifisches Bindungssubstrat gebunden ist. Das stereospezifische Bindungssubstrat kann dabei aus Opsin bestehen, das in Verbindung mit 11-cis-Retinal Rhodopsin als photosensitive Konfiguration der Speichersubstanz bildet. Alternativ dazu kann das stereospezifische Bindungssubstrat aus einem Bindeprotein bestehen, das mit 11-cis-Retinal die lichtunempfindliche Verbindung CRALBP·11-cis-Retinal bildet (CRALBP = Cellular-Retinaldehyde-Binding-Protein).

Weiter kann das all-trans-Retinal enzymatisch in all-trans-Retinol umgesetzt und unter Verwendung eines zellulären Retinol-Bindungsproteins (CRBP) zur Regeneration durch Berührung mit dem Melanin-Pigment unter cis-Isomerisierung bei Lichtabschluß in die photosensitive 11-cis-Konfiguration zurückgeführt werden.

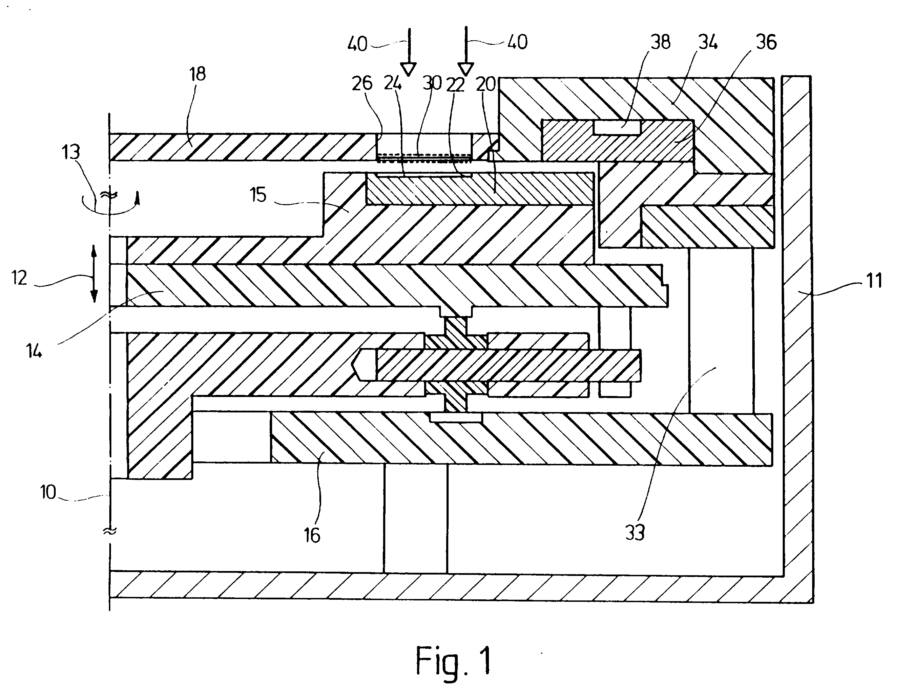

Im folgenden wird die Erfindung anhand eines in der Zeichnung in schematischer Weise dargestellten Ausführungsbeispiels näher erläutert. Es zeigen
- Fig. 1: einen Ausschnitt aus einer Versuchsapparatur in senkrecht geschnittener Darstellung;

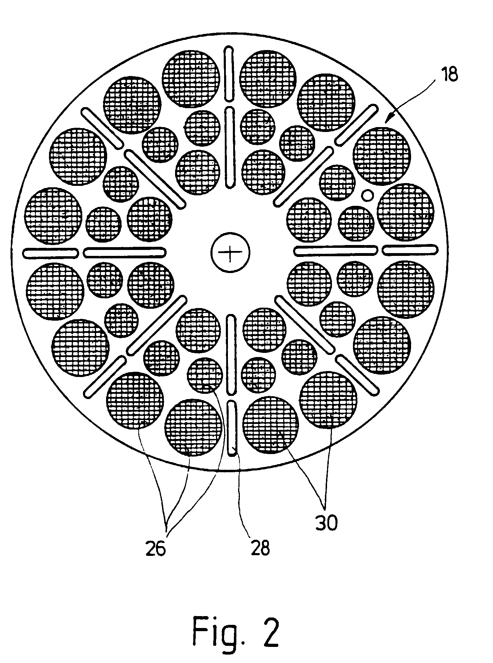

- Fig. 2: eine Draufsicht auf den Regenerationsmittelträger der Versuchsapparatur nach Fig. 1.

Die in der Zeichnung dargestellte Versuchsapparatur soll zum Nachweis von Wärmeübertragungseffekten durch einen mit Sonnenstrahlen beaufschlagten Latentspeicher dienen und ist in ihrem Aufbau noch nicht optimiert. Die Abmessungen der Versuchsapparatur sind in der Zeichnung der Anschaulichkeit halber nicht maßstäblich dargestellt.

Die Versuchsapparatur besteht im wesentlichen aus einer ersten, gehäusefesten Tragstruktur 16 und einer parallel zur Zentralachse 10 des Gehäuses 11 in Richtung des Doppelpfeils 12 heb- und senkbaren zweiten Tragstruktur 14, die zusätzlich um die Zentralachse 10 in Richtung des Pfeils 13 schrittweise gegenüber der gehäusefesten Tragscheibe 18 drehbar ist. Die zweite Tragstruktur 14 weist in ihrem oberen Bereich 15 einen Kupferring 20 mit einer ringförmigen Vertiefung 22 zur Aufnahme einer stereoisomeren Speichersubstanz 24, vorzugsweise Retinal in 11-cis und all-trans Konfiguration, auf, während die kreisförmige Tragscheibe 18 mit im Winkelabstand voneinander angeordneten kreisrunden Durchbrüchen 26 sowie langgestreckten Fensteraussparungen 28 versehen ist. Die Durchbrüche 26 sind mit Preßscheiben 30 bestückt, die aus pulverförmigem Regenerationsmittel, vorzugsweise einem Melanin-Pigment bestehen. Die Tragscheibe 18 ist drehfest in einem gehäusefesten Kunststoffring 34 angeordnet, der über Verbindungsbolzen 33 mit der Tragstruktur 16 verbunden ist. Innerhalb des Kunststoffrings 34 befindet sich ein als Kupferring ausgebildeter Wärmeaustauscher 36, dessen Hohlraum 38 mit einem flüssigen und/oder gasförmigen Kühlmittel beaufschlagbar ist.

Beim Betrieb wird die Versuchsapparatur in Richtung der Pfeile 40 mit Sonnenstrahlung beaufschlagt. Dabei gelangt Sonnenstrahlung sowohl zu den RegenerationsmittelScheiben 30 als auch, durch die Fensteröffnungen 28 hindurch, zur Speichersubstanz 24. Durch die Lichteinstrahlung über die Fenster 28 wird in der Speichersubstanz durch Photoisomerisierung Energie freigesetzt und in Form von Wärme an den Kupferkörper 20 abgegeben.

Beim Weiterdrehen der Tragstruktur 14 gelangt der zuvor durch Energiefreisetzung verbrauchte Speichersubstanzbereich in den Bereich der benachbarten Regenerationsmittelscheiben 30 und wird dort durch Anheben der Tragstruktur 14 und Berührungskontakt mit dem durch Sonneneinstrahlung aktivierten Regenerationsmittel regeneriert. Der Bewegungsablauf wird zweckmäßig so eingestellt, daß der Regenerationsvorgang in der Speichersubstanz beim Auftreffen von Sonnenlicht durch das folgende Fenster 28 weitgehend abgeschlossen ist.

Beim Heben der Tragstruktur 14 in Richtung des Pfeils 12 tritt außerdem ein Wärmekontakt zwischen dem Kupferring 20 und dem Wärmetauscherring 36 auf, über den die aus der Speichersubstanz 24 freigesetzte Wärme in das Kühlmittel 38 übertragen wird. Aus der Aufheizung des Kühlmittels 38 lassen sich Rückschlüsse hinsichtlich des ablaufenden Speicherprozesses ziehen.

Zusammenfassend ist folgendes festzustellen: Die Erfindung bezieht sich auf einen Latentspeicher mit einem photosensitiven Speichermedium und einem Regenerationsmittel. Zu diesem Zweck wird eine organische Speichersubstanz mit mindestens zwei stabilen stereoisomeren Konfigurationen verwendet, von denen eine erste Konfiguration photosensitiv ist und durch Photoisomerisation unter Energiefreisetzung in die zweite Konfiguration umsetzbar ist, während die zweite Konfiguration durch Kontakt mit einem Sonnenstrahlen absorbierenden stereoselektiven Regenerationsmittel unter Energieaufnahme in die erste Konfiguration zurückführbar ist.

## Patentansprüche

1. Verfahren zur Speicherung von Energie in einer Speichersubstanz und zur Energiefreisetzung aus der Speichersubstanz, **dadurch gekennzeichnet,** daß eine organische Speichersubstanz mit mindestens zwei stabilen stereoisomeren Konfigurationen verwendet wird, von denen eine erste, photosensitive Konfiguration durch Photoisomerisation unter Energiefreisetzung in eine zweite Konfiguration umgesetzt wird, und daß die zweite Konfiguration durch Kontakt mit einem sonnenstrahlenabsorbierenden stereoselektiven Regenerationsmittel unter Energieaufnahme in die erste Konfiguration zurückgeführt wird.

2. Verfahren nach Anspruch 1, **dadurch gekennzeichnet,** daß ein cis-Retinal, vorzugsweise 11-cis-Retinal, als erste, photosensitive Konfiguration der Speichersubstanz durch Photoisomerisation unter Energiefreisetzung in all-trans-Retinal als zweite Konfiguration umgesetzt wird und daß das all-trans-Retinal durch Kontakt mit einem stereoselektiven, vorzugsweise aus Melanin bestehenden Pigment oder einem in das Pigment eingebetteten stereoselektiven Katalysator unter Energieaufnahme in die cis-Konfiguration zurückgeführt wird.

3. Verfahren nach Anspruch 1 oder 2, **dadurch gekennzeichnet,** daß die photosensitive stereoisomere Konfiguration der Speichersubstanz gegen Lichtzutritt abgeschirmt und zur Auslösung der stereoisomeren Umwandlung mit Sonnenstrahlung beaufschlagt wird.

4. Verfahren nach einem der Ansprüche 1 bis 3, da**durch gekennzeichnet,** daß die photosensitive Konfiguration der Speichersubstanz zu Lager- und Transportzwecken an ein stereospezifisches Bindungssubstrat gebunden wird.

5. Verfahren nach Anspruch 4, **dadurch gekennzeichnet,** daß als stereospezifisches Bindungssubstrat Opsin verwendet wird, das in Verbindung mit 11-cis-Retinal Rhodopsin als photosensitive Konfiguration der Speichersubstanz bildet.

6. Verfahren nach Anspruch 4, **dadurch gekennzeichnet,** daß als stereospezifisches Bildungssubstrat ein celluläres Bindungsprotein (CRALBP) verwendet wird, das mit 11-cis-Retinal eine lichtabschirmende verbindung CRALBP·11-cis-Retinal bildet.

7. Latentspeicher zur Durchführung des Verfahrens nach einem der Ansprüche 1 bis 6, **dadurch gekennzeichnet,** daß die stereoisomere Speichersubstanz (24) und das Regenerationsmittel (30) auf je einem Träger (20,18) angeordnet sind, wobei die Träger unter Herstellung eines Berührungskontakts zwischen Speichersubstanz (24) und Regenerationsmittel (30) gegeneinander verschiebbar sind, wobei das photosensitive Regenerationsmittel (30) dauernd oder zeitweilig mit Sonnenstrahlen (40) beaufschlagbar ist und wobei die Speichersubstanz (24) während der Kontaktphasen gegen Sonnenlicht (40) abgeschirmt ist und außerhalb der Kontaktphasen zumindest zeitweilig mit Sonnenlicht (40) beaufschlagt ist.

8. Latentspeicher nach Anspruch 7, **dadurch gekennzeichnet,** daß der die Speichersubstanz (24) aufnehmende Träger (20) eine hohe Wärmeleitfähigkeit aufweist.

9. Latentspeicher nach Anspruch 7 oder 8, **dadurch gekennzeichnet,** daß der die Speichersubstanz aufnehmende Träger (20) oder ein mit diesem während der Kontaktphase in Wärmekontakt bringbarer Wärmeleitkörper (36) als flüssigkeits- und/oder gasdurchströmter Wärmeaustauscher ausgebildet ist.

10. Latentspeicher nach Anspruch 9, **dadurch gekennzeichnet,** daß der Wärmeaustauscher (36) gegenüber dem Reaktionsmittelträger (18) ausgefluchtet ist.

11. Latentspeicher nach einem der Ansprüche 7 bis 10, **dadurch gekennzeichnet,** daß der Regenerationsmittelträger (18) als Platte mit einer Mehrzahl von einen Winkelabstand voneinander aufweisenden Durchbrüchen (26) zur Aufnahme von Regenerationsmittelscheiben (30) sowie im Bereich zwischen den Durchbrüchen angeordneten, zu einer Speichersubstanzschicht hin offenen Fenstern (28) aufweist, daß der Speichersubstanzträger (20) gegenüber der Platte (18) schrittweise verdrehbar ist und daß in vorgegebenen Schrittpausen der Berührungskontakt zwischen der Speichersubstanz (24) und den Reaktionsmittelscheiben (30) herstellbar ist.

12. Latentspeicher nach einem der Ansprüche 7 bis 11, **dadurch gekennzeichnet,** daß die Regenerationsmittelscheiben (30) als vorzugsweise durch eine Gitterstruktur stabilisierte Preßscheiben ausgebildet sind, die auf ihrer Außenseite mit Sonnenstrahlen beaufschlagbar und an ihrer Innenseite gegen die Speichersubstanz (24) andrückbar sind.

13. Latentspeicher nach einem der Ansprüche 7 bis 10, **dadurch gekennzeichnet,** daß der die Speichersubstanz (24) aufnehmende Träger als Zylinder, Kegel oder vorzugsweise pyramidenstumpfförmiges Prisma ausgebildet ist, an dessen Außen- oder Umfangsfläche die Speichersubstanz (24) angeordnet ist, und daß der Regenerationsmittel-Träger als den Speichersubstanzträger außen übergreifender Hohlträger ausgebildet ist.

14. Latentspeicher nach Anspruch 13, **dadurch gekennzeichnet,** daß der Hohlträger relativ zu dem Speichersubstanzträger axial verschiebbar, vorzugsweise jalousienartig heb- und senkbar ist.

15. Latentspeicher nach einem der Ansprüche 7 bis 14, **dadurch gekennzeichnet,** daß die Speichersubtanz und/oder das Regenerationsmittel im Kontakbereich eine oberflächenvergrößernde, vorzugsweise aufgerauhte Oberflächenstruktur aufweist.

## Claims

1. A method for storing energy in a storage substance and for liberating energy from the storage substance, characterized in that an organic storage substance having at least two stable stereoisometric configurations is used, of which a first, photosensitive configuration is transformed into a second configuration by photoisomerization and liberation of energy, and that the second configuration is transformed into the first configuration by contact with a solar radiation absorbing stereoselective regeneration medium while absorbing energy.

2. The method of claim 1, characterized in that a cis-retinal, preferably 11-cis-retinal, as the first, photosensitive configuration of the storage substance is transformed into all-trans-retinal as the second configuration by photoisomerization while liberating energy, and that the all-trans-retinal is transformed back into the cis-configuration by contact with a stereoselective pigment, preferably consisting of melanin, or a stereoselective catalyst embedded in the pigment while absorbing energy.

3. The method of claim 1 or 2, characterized in that the photosensitive stereoisometric configuration of the storage substance is screened from light and subjected to solar radiation for initiating the stereoisometric transformation.

4. The method of one of claims 1 to 3, characterized in that the photosensitive configuration of the storage substance is bound to a stereospecific binding substrate for storage and transport purposes.

5. The method of claim 4, characterized in that opsin is used as the stereospecific binding substrate, which together with 11-cis-retinal forms rhodopsin as the photosensitive configuration of the storage substance.

6. The method of claim 4, characterized in that a cellular binding proteine (CRALBP) is used as the stereospecific binding substrate, which together with 11-cis-retinal forms a light-shielding compound CRALBP·11-cis-retinal.

7. A latent store for performing the method of one of the claims 1 to 6, characterized in that the stereoisometric storage substance (24) and the regeneration medium (30) are each positioned on a carrier (20,18), wherein the carriers are moveable with respect to each other, creating a contact between the storage substance (24) and the regeneration medium (30), wherein the photosensitive regeneration medium (30) is continuously or intermittently subjectable to solar radiation (40), and wherein the storage substance (24) is screened from solar radiation during the contact phases and subjectable to solar radiation (40) at least intermittently outside the contact phases.

8. The latent store of claim 7, characterized in that the carrier (20) carrying the storage substance (24) has a high thermal conductivity.

9. The latent store of claim 7 or 8, characterized in that the carrier (20) carrying the storage substance or a heat exchanger (36) which may be brought into thermal contact during the contact phase is designed as a heat exchanger through which fluid or gas flows.

10. The latent store of claim 8, characterized in that the heat exchanger (36) is aligned with respect to the regeneration medium carrier (18).

11. The latent store of one of claims 7 to 10, characterized in that the regeneration medium carrier (18) has a plate with a multitude of openings (26) which are positioned in angular increments with respect to each other for accepting regeneration medium disks (30), as well as window recesses (28) open with respect to a storage substance layer and positioned in the region inbetween the openings, that the storage substance carrier (20) is rotatable in increments with respect to the plate (18) and that the contact between the storage substance (24) and the regeneration medium disks (30) is realized in predetermined pauses of the incremental rotations.

12. The latent store of one of claims 7 to 11, characterized in that the regeneration medium disks (30) are designed as pressed disks preferably stabilized by a lattice structure, in which the disks are subjectable to solar radiation on their outer side and can be pressed against the storage substance (24) with their inner side.

13. The latent store of one of claims 7 to 10, characterized in that the carrier accepting the storage substance (24) is designed to be a cylinder, a cone or preferably a truncated pyramid-shaped prism, at whose outer or perimeter surface the storage substance (24) is positioned, and that the regeneration medium carrier is designed to be a hollow carrier surrounding the storage substance carrier.

14. The latent store of claim 13, characterized in that the hollow carrier is axially moveable with respect to the storage substance carrier, preferably liftable and lowerable in the way of a venetian blind.

15. The latent store of one of claims 7 to 14, characterized in that the storage substance and/or the regeneration medium have in the contact region a surface structure enlarging the surface area, preferably a roughened surface structure.

## Revendications

1. Procédé d'accumulation d'énergie dans une substance d'accumulation et de libération d'énergie à partir de ladite substance d'accumulation, **caractérisé en ce** qu'il utilise une substance d'accumulation organique avec au moins deux configurations stéréo-isomères stables dont une première configuration photosensible est transformée par photoisomérisation, avec libération d'énergie, en une seconde configuration, et que la seconde configuration est ramenée à la première configuration par la mise en contact avec un régénérant stéréosélectif absorbant les rayons solaires, avec absorption d'énergie.

2. Procédé selon la revendication 1, caractérisé en ce qu'un cis-rétinal, de préférence 11-cis-rétinal, comme première configuration photosensible de la substance d'accumulation est transformé par photoisomérisation, avec libération d'énergie, en all-trans-rétinal comme seconde configuration, et que le all-trans-rétinal est ramené, par la mise en contact avec un pigment stéréosélectif, composé de préférence de mélanine, ou avec un catalyseur stéréosélectif incorporé dans le pigment, avec absorption d'énergie, en la configuration cis.

3. Procédé selon la revendication 1 ou 2, caractérisé en ce que la configuration stéréo-isomère photosensible de la substance d'accumulation est mise à l'abri de la lumière et peut être exposée au rayonnement solaire pour déclencher la transformation stéréo-isomère.

4. Procédé selon l'une des revendications 1 à 3, caractérisé en ce que, pour le transport et le stockage, la configuration photosensible de la substance d'accumulation est liée à un substrat de liaison stéréospécifique.

5. Procédé selon la revendication 4, caractérisé en ce qu'il utilise comme substrat de liaison stéréospécifique de l'opsine qui, en combinaison avec du 11-cis-rétinal, forme de la rhodopsine comme configuration photosensible de la substance d'accumulation.

6. Procédé selon la revendication 4, caractérisé en ce qu'il utilise comme substrat de liaison stéréospécifique une protéine liante cellulaire (CRALBP) qui, en combinaison avec du 11-cis-rétinal, forme un composé photorésistant CRALBP · 11-cis-rétinal.

7. Accumulateur latent pour la mise en oeuvre du procédé selon l'une des revendications 1 à 6, caractérisé en ce que la substance d'accumulation stéréo-isomère (24) et le régénérant (30) sont disposés chacun sur un support (20, 18), les supports pouvant être déplacés l'un par rapport à l'autre, avec établissement d'un contact entre la substance d'accumulation (24) et le régénérant (30), le régénérant (30) pouvant être exposé, en permanence ou temporairement, aux rayons solaires (40), et la substance d'accumulation (24) étant protégée contre la lumière solaire (40) pendant les phases de contact et exposée au moins temporairement à la lumière solaire (40) en dehors des phases de contact.

8. Accumulateur latent selon la revendication 7, caractérisé en ce que le support (20) recevant la substance d'accumulation (24) présente une grande conductibilité thermique.

9. Accumulateur latent selon la revendication 7 ou 8, caractérisé en ce que le support (20) recevant la substance d'accumulation ou un corps conducteur de chaleur (36) pouvant être mis en contact thermique avec celui-ci pendant les phases de contact, peut être réalisé sous la forme d'un échangeur de chaleur parcouru par un liquide et/ou un gaz.

10. Accumulateur latent selon la revendication 9, caractérisé en ce que l'échangeur de chaleur (36) est aligné avec le support de régénérant (18).

11. Accumulateur latent selon l'une des revendications 7 à 10, caractérisé en ce que le support de régénérant (18) est conformé en plaque et présente une pluralité d'ajours (26) pour la réception de disques de régénérant (30), disposés à distance angulaire les uns des autres, ainsi que des fenêtres (28) disposées dans la région entre les ajours et ouvertes en direction de la substance d'accumulation, que le support de substance d'accumulation (20) peut être tourné pas à pas par rapport à la plaque (18), et que le contact entre la substance d'accumulation (24) et les disques de régénérant (30) peut être établi à des intervalles de pas prédéterminés.

12. Accumulateur latent selon l'une des revendications 7 à 11, caractérisé en ce que les disques de régénérant (30) sont réalisés de préférence sous la forme de disques comprimés stabilisés par une structure réticulaire, dont la surface extérieure peut être exposée aux rayons solaires et dont la surface intérieure peut être appliquée contre la substance d'accumulation (24).

13. Accumulateur latent selon l'une des revendications 7 à 10, caractérisé en ce que le support recevant la substance d'accumulation (24) est réalisé sous la forme d'un cylindre, d'un cône ou d'un prisme, de préférence en forme de pyramide tronquée, sur la surface extérieure ou périphérique duquel est disposée la substance d'accumulation (24), et que le support de régénérant est conformé en un support creux qui recouvre extérieurement le support de substance d'accumulation.

14. Accumulateur latent selon la revendication 13, caractérisé en ce que le support creux peut être déplacé axialement, de préférence relevé et abaissé à la manière d'une jalousie, par rapport au support de substance d'accumulation.

15. Accumulateur latent selon l'une des revendications 7 à 14, caractérisé en ce que la substance d'accumulation et/ou le régénérant présentent dans la zone de contact une structure augmentant la surface, de préférence rugueuse.
